## Europäisches Patentamt

## European Patent Office

## Office européen des brevets

(11) Veröffentlichungsnummer: **0 037 839**
**A1**

(19)

---

(12) # EUROPÄISCHE PATENTANMELDUNG

(21) Anmeldenummer: **80101837.5**

(22) Anmeldetag: **05.04.80**

(51) Int. Cl.³: **G 03 B 3/08**

---

(43) Veröffentlichungstag der Anmeldung: **21.10.81**
**Patentblatt 81/42**

(84) Benannte Vertragsstaaten: **AT BE CH DE FR GB IT LI LU NL SE**

(71) Anmelder: **Rollei-Werke Franke & Heidecke GmbH + Co KG, Salzdahlumer Strasse 196, D-3300 Braunschweig (DE)**

(72) Erfinder: **Krüger, Roland, Dipl.-Ing., Wichernstrasse 6, D-3340 Wolfenbüttel (DE)**
Erfinder: **Proske, Joachim, Dipl.-Phys., Am Hasengarten 41, D-3300 Braunschweig (DE)**
Erfinder: **Rösner, Ortwin, Dr., Dipl.-Phys., Hiltenspergerstrasse 58, D-8000 München 40 (DE)**
Erfinder: **Swarofsky, Walter, Ing. (grad.), Turmstrasse 39, D-3300 Braunschweig (DE)**

(74) Vertreter: **Gramm, Werner, Dipl.-Ing. et al, Patentanwälte Gramm + Lins Theodor-Heuss-Strasse 2, D-3300 Braunschweig (DE)**

---

(54) **Kamera mit einer Vorrichtung zur Anzeige der Schärfentiefe.**

(57) Die Vorrichtung umfaßt eine im Sucher (10) sichtbare Entfernungsskala (14), auf welcher ein dem durch die eingestellte Blende und Entfernung gegebenen Schärfentiefenbereich entsprechender Skalenabschnitt markierbar ist. Jedem Skalenwert (15) der Entfernungsskala (14) ist ein lichtemittierendes Element (16), z. B. eine Leuchtdiode oder ein Flüssigkristallsegment, zugeordnet, wobei nur die in dem dem Schärfentiefenbereich entsprechenden Skalenabschnitt angeordneten Elemente (16) sichtbar sind. Ein zusätzliches Schärfentiefen-Überlauf-Anzeigeelement (26) gestattet die optimale Ausnutzung des zur Verfügung stehenden Schärfentiefenbereichs. Ein Zerstreuungskreis-Vorwähler (27) zur Eingabe eines gewünschten Zerstreuungskreises und damit einer gewünschten Abbildungsqualität in Verbindung mit einer Zerstreuungskreis-Anzeige (28) ermöglicht dem Kamerabenutzer ohne längere Überlegung die Wahl zwischen einem größeren Schärfenbereich bei verminderter Abbildungsqualität oder einem geringen Schärfenbereich bei hoher Abbildungsqualität.

---

Rollei-Werke
Franke & Heidecke
GmbH & Co KG
3300 Braunschweig                    18.März 1980

Kamera mit einer Vorrichtung
zur Anzeige der Schärfentiefe

Die Erfindung betrifft eine Kamera mit einer Vorrichtung zur Anzeige der Schärfentiefe der im Oberbegriff des Anspruchs 1 definierten Gattung.

Bei einer bekannten Kamera dieser Art ist die im Sucher sichtbare Entfernungsskala mittels kurvenförmiger Schlitze, in die kamerafeste Stifte eingreifen, beweglich gelagert und kann über den Entfernungseinsteller je nach eingestellter Entfernung verschoben werden. Die die Blendenöffnung begrenzenden beiden Blendenlamellen tragen jeweils eine Abdeckfahne aus transparentem gefärbten Material, die im Sucher vor der Entfernungsskala angeordnet sind. Je nach eingestellter Blende ist der gegenseitige Abstand der einander zugewandten Kanten der Abdeckfahnen größer oder kleiner. Die Abdeckfahnen geben daher zwischen sich einen mehr oder minder großen Bereich der Entfernungsskala frei. Dieser freie Bereich gibt die Tiefenschärfe für die eingestellte Blendenöffnung und die eingestellte Entfernung an.

Eine solche Vorrichtung zur Anzeige der Schärfentiefe ist insbesondere infolge der sich innerhalb des Suchers bewegenden Teile, wie Entfernungsskala und Abdeckfahnen, konstruktiv aufwendig und erfordert vor allem eine sorgfältige und präzise Montage. Dies bedeutet sehr hohe Montagekosten, die sich wesentlich in den Gestehungskosten der Kamera niederschlagen.

Der Erfindung liegt die Aufgabe zugrunde, eine Kamera mit einer Vorrichtung zur Anzeige der Schärfentiefe der eingangs genannten Art zu schaffen, bei welcher der Kamerabenutzer beim Anvisieren des Aufnahmeobjekts einen sofortigen Überblick über den zur Verfügung stehenden Schärfentiefenbereich erhält, bei welcher die Schärfentiefen-Anzeigevorrichtung einfach und montagefreundlich aufgebaut ist und keine den Montageaufwand vergrößernden, beweglichen Bauteile enthält.

Diese Aufgabe ist bei einer Kamera mit einer Vorrichtung zur Anzeige der Schärfentiefe der im Oberbegriff des Anspruchs 1 definierten Gattung erfindungsgemäß durch die Merkmale im Kennzeichnungsteil des Anspruchs 1 gelöst.

Bei der erfindungsgemäßen Kamera sieht der Benutzer beim Hindurchblicken durch den Sucher ein leuchtendes Band auf der Entfernungsskala, welches ihm sofort einen Überblick über den zur Verfügung stehenden Schärfenbereich verschafft. Schon die Länge des leuchtenden Bandes und seine Lage auf der Entfernungsskala (z.B. nahe 0,9 m oder nahe $\infty$) gibt ihm eine erste Orientierungsmöglichkeit darüber, ob der zur Verfügung stehende Schärfenbereich klein oder groß ist und in welcher Entfernungsgrößenordnung er liegt. Durch Ablesen der an den beiden Enden des leuchtenden Bandes jeweils befindlichen Entfernungswerte auf der Entfernungsskala kann er dann exakt die vordere und hintere Entfernungsgrenze des zur Verfügung stehenden Schärfenbereichs ermitteln.

Der erfindungsgemäße Aufbau der Schärfentiefen-Anzeigevorrichtung ist einfach und enthält keinerlei bewegliche Teile. Das Bauvolumen einer Anzeigezeile mit den einzelnen lichtemittierenden Elementen, wie z.B. Leuchtdioden oder Flüssigkristallzellen, ist äußerst gering, so daß die Anzeigevorrichtung insgesamt wenig Bauraum beansprucht und sich gut in sog. Kompaktkameras integrieren läßt. Da in vielen modernen Kameras bereits elektronische Rechenwerke in Form von Mikroprozessoren vorhanden sind, deren Kapazität in den meisten Fällen nicht vollständig durch die Kamerafunktionen belegt ist, kann die Steuerung der Schärfentiefen-Anzeigevorrichtung noch von dem Mikroprozessor übernommen werden, so daß außer der zusätzlichen Leuchtleiste oder Leuchtzeile keine weiteren Bauelemente erforderlich sind.

Eine besonders vorteilhafte Ausführungsform der Erfindung ergibt sich aus Anspruch 3. Diese Ausführungsform eignet sich besonders für Kameras, bei welchen kein Mikroprozessor vorhanden ist und die Steuerungsfunktion der einzelnen Anzeigeelemente von einer gesondert vorzusehenden Steuerschaltung übernommen werden muß. Bei dieser Ausführungsform ergibt sich ein besonders einfacher Aufbau der Vorrichtung zur Anzeige der Schärfentiefe. Neben der Anzeigezeile aus lichtemittierenden Elementen ist lediglich noch ein im Handel preisgünstig erhältlicher integrierter Schaltungs- oder Schaltbaustein notwendig,der in Abhängigkeit von der Größe seiner Eingangsspannung einen seiner Ausgänge ansteuert und damit das jeweils mit diesem Ausgang verbundene lichtemittierende Element ansteuert. Ein solcher Schaltbaustein ist unter der Handelsbezeichnung LM 3914 der Firma National Semiconductor oder auch unter der Handelsbezeichnung UAA 170 der Firma Siemens bekannt.

Dadurch, daß in Abkehr von der bisher üblichen Schaltung dieses integrierten Schaltbausteins nunmehr an dessen Eingang die Summenspannung der Ausgangsspannungen der beiden Istwertgeber für die Blendeneinstellung und für die Entfernungseinstellung gelegt ist und erfindungsgemäß die Ausgangsspannung des Entfernungs-Istwertgebers als Gleichspannung und die Ausgangsspannung des Blenden-Istwertgebers als Wechselspannung ausgebildet ist, wird in denkbar einfacher Weise das den Schärfenbereich kennzeichnende leuchtende Band an der Entfernungsskala erzeugt. Der für die Entfernungseinstellung charakteristischen Gleichspannung überlagert sich eine Wechselspannung, deren Amplitude proportional der Blendenzahl ist. Jeweils entsprechend der momentanen Größe der Summenspannung am Eingang des integrierten Schaltbausteins wird ein Ausgang des Schaltbausteins nach dem anderen angesteuert, und das jeweils mit dem Ausgang verbundene lichtemittierende Element leuchtet auf. Bei entsprechender Wahl der Frequenz der Wechselspannung kann das Auge dem schnellen Wechsel des Aufleuchtens und Erlöschens der verschiedenen lichtemittierenden Elemente nicht mehr folgen, und es entsteht für den Kamerabenutzer ein leuchtendes Band, dessen Lage auf der Entfernungsskala von der Gleichspannung - entsprechend der eingestellten Entfernung - und dessen Länge von der Größe der Wechselspannungsamplitude am Ausgang des Blenden-Istwertgebers - entsprechend der eingestellten Blende - bestimmt wird.

0037839

Eine besonders vorteilhafte Ausführungsform ergibt sich dabei aus Anspruch 4. Durch den vorgesehenen Kondensator wird das Gleichstrompotential des Entfernungs-Istwertgebers von dem Blenden-Istwertgeber ferngehalten und kann letzteren nicht beeinflussen.

Eine besonders vorteilhafte Ausführungsform der Erfindung ergibt sich aus Anspruch 5. Das erfindungsgemäß vorgesehene Schärfentiefen-Überlauf-Anzeigeelement gibt dem Kamerabenutzer die Möglichkeit, den zur Verfügung stehenden Schärfenbereich optimal auszunutzen. Mit Hilfe dieser Anzeige ist es nämlich möglich, eine sog. "Naheinstellung auf Unendlich" vorzunehmen. Der Kamerabenutzer hat hierzu lediglich den Entfernungseinsteller der Kamera so weit in Richtung kleinerer Entfernung zu drehen, bis das Schärfentiefen-Überlauf-Anzeigeelement erlischt und das sog. Schärfentiefen-Leuchtband bis zu der Entfernung $\infty$ der Entfernungsskala reicht. Bei dieser Einstellung liegt die hintere Grenze des zur Verfügung stehenden Schärfenbereichs gerade im Unendlichen und die vordere Grenze des Schärfenbereiches hat sich so nahe wie möglich hin zu der Kamera verschoben.

Vorteilhaft ist dabei vor allem die Ausführungsform der Erfindung gemäß Anspruch 6. Durch diese Schaltungsmaßnahmen besteht der zusätzliche Aufwand für das Schärfentiefen-Überlauf-Anzeigeelement lediglich in einem zusätzlichen lichtemittierenden Element, z.B. einer Leuchtdiode oder einem Flüssigkristall. Bei Verwendung des vorstehend beschriebenen bekannten integrierten Schaltbausteins wird das Anzeigeelement einfach an den nächstfolgenden Ausgang des Schaltbausteins angeschlossen, der bei einem etwas höheren Eingangspotential anspricht als derjenige Ausgang des Schaltbausteins,

0037839

der mit dem lichtemittierenden Element verbunden ist, das die Unendlichkeits-Anzeige auf der Entfernungsskala markiert. Sind an dem integrierten Schaltbaustein noch weitere, nicht belegte Ausgänge vorhanden, die mit zunehmendem Eingangspotential angesteuert werden, so werden zweckmäßigerweise alle diese Ausgänge mit dem Schärfentiefen-Überlauf-Anzeigelement verbunden.

Eine besonders vorteilhafte Ausführungsform der Erfindung ergibt sich aus Anspruch 7. Der erfindungsgemäße Zerstreuungskreis-Vorwähler gibt dem Kamerabenutzer die Möglichkeit, zwischen einer großen Abbildungsqualität -·je nach Notwendigkeit der Nachvergrößerung eines Negativs - mit dem damit verbundenen, zur Verfügung stehenden geringen Schärfenbereich und einer geringeren Abbildungsqualität mit dem damit verbundenen größeren Schärfenbereich zu wählen. Bei unveränderter Einstellung der Blende und Entfernung an der Kamera wird bei Umschaltung des Zerstreuungskreis-Vorwählers von beispielsweise 25 µ auf z.B. 50 µ das Schärfentiefen-Leuchtband auf der Entfernungsskala länger und zeigt dem Kamerabenutzer einen wesentlich größeren Schärfenbereich an, der bei der vorgenommenen Kameraeinstellung (Blende und Entfernung) zur Verfügung steht. Die geringere Abbildungsqualität wird dem Kamerabenutzer durch die Zerstreuungskreisanzeige sichtbar gemacht, z.B. dadurch, daß ein einem Zerstreuungskreiswert 50 µ zugeordnetes lichtemittierendes Element aufleuchtet.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen.

Hierdurch haben jedoch alle diese Anspruchsmerkmale als an dieser Stelle ausdrücklich und erfindungswesentlich offenbart zu gelten.

Die Erfindung ist anhand eines in der Zeichnung dargestellten Ausführungsbeispiels im folgenden näher beschrieben. Es zeigen in schematischer Darstellung:

Fig. 1 ein Sucherfeld einer Kamera mit einem Schaltplan einer Vorrichtung zur Anzeige der Schärfentiefe,

Fig. 2 - 5 jeweils in vergrößerter Darstellung eine Entfernungsskala mit zugeordneten lichtemittierenden Elementen, mit einem Schärfentiefen-Überlauf-Anzeigeelement und einer Zerstreuungskreisanzeige bei verschiedenen Entfernungseinstellungen und zwei ausgewählten Blendeneinstellungen, jeweils für zwei mögliche Stellungen eines manuellen Zerstreuungskreis-Vorwählers.

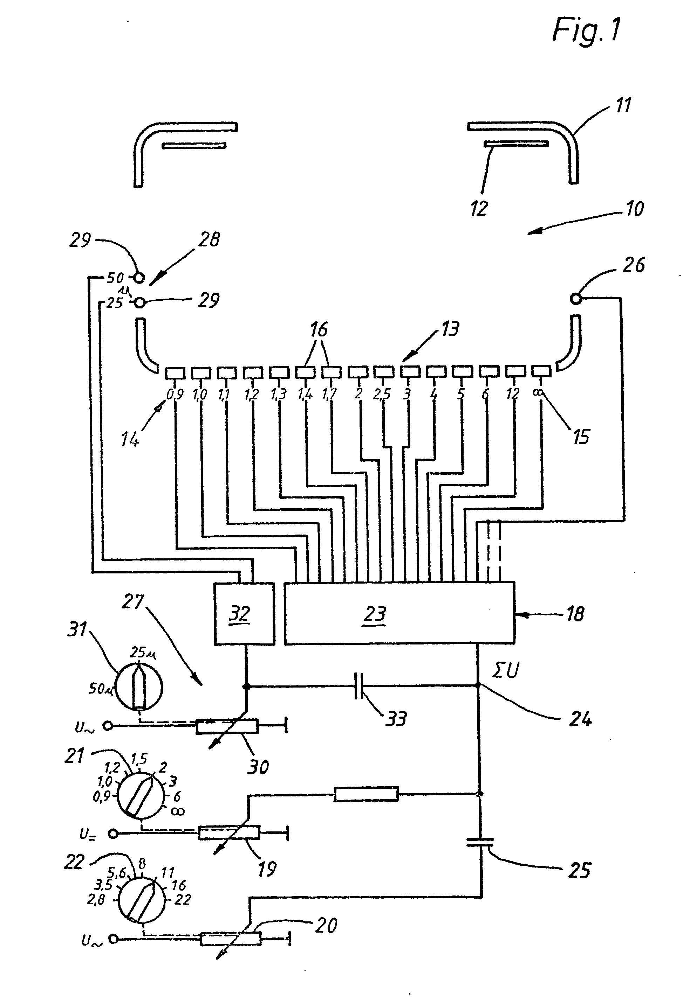

In dem in Fig. 1 dargestellten Sucherfeld 10 einer Sucherkamera sind mit 11 ein Sucherrahmen und mit 12 Parallaxmarken bezeichnet. Die Kamera weist eine Vorrichtung zur Anzeige der Schärfentiefe auf, im folgenden Schärfentiefen-Anzeigevorrichtung 13 genannt. Eine Entfernungsskala 14 der Schärfentiefen-Anzeigevorrichtung 13 ist im Sucherfeld 10 an der unteren Sucherrahmenbegrenzung angeordnet. Die Entfernungsskala weist die Skalenwerte 15 von 0,9m bis ∞ auf. Jedem Skalenwert 15 ist ein lichtemittierendes Element 16, d.h. ein Element, das bei Ansteuerung Licht aussendet, zugeordnet. Das lichtemittierende Element kann z.B. als eine Leuchtdiode oder als eine Flüssigkristallzelle
ausgebildet sein.

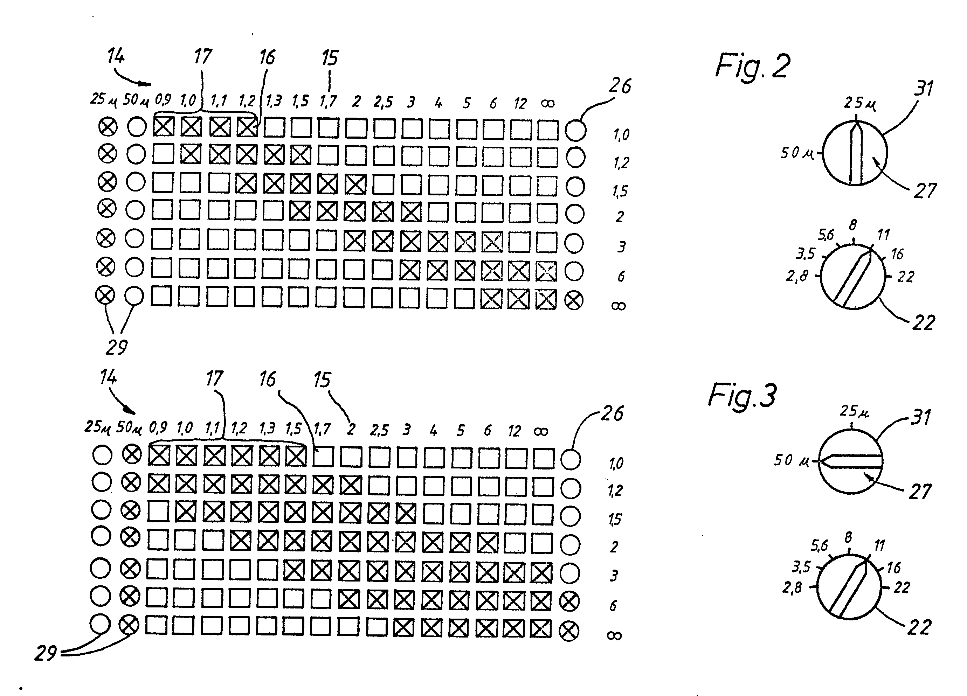

Auf der Entfernungsskala 14 ist ein Skalenabschnitt markierbar, der dem Schärfenbereich, auch Schärfentiefenbereich genannt, entspricht, der durch die an der
Kamera eingestellte Blende und Entfernung festgelegt
ist. Dieser Skalenabschnitt, der in den Fig. 2 - 5
mit 17 bezeichnet ist, wird dadurch auf der Entfernungsskala 14 dem durch den Sucher der Kamera hindurchblickenden Benutzer sichtbar gemacht, daß nur die in
dem den Schärfenbereich entsprechenden Skalenabschnitt
17 angeordneten lichtemittierenden Elemente 16 gleichzeitig oder annähernd gleichzeitig aufleuchten. Das
Aufleuchten der lichtemittierenden Elemente 16 ist in
Fig. 2 - 5 durch ein Kreuz symbolisiert, so daß die
jeweils mit einem solchen Kreuz gekennzeichneten lichtemittierenden Elemente 16 den Skalenabschnitt 17 markieren.

Die einzelnen lichtemittierenden Elemente 16, im folgenden der Einfachheit halber Leuchtdioden 16 genannt,
sind jeweils mit den Ausgängen eines elektronischen
Rechenwerkes 18 verbunden, dessen Eingang bzw. Eingänge
an Istwertgebern 19, 20 zur Eingabe der eingestellten Entfernung bzw. Blende angeschlossen ist. Der Entfernungs-
Istwertgeber 19 ist mit einem Entfernungseinsteller 21
und der Blenden-Istwertgeber 20 mit einem Blendeneinsteller
22 mechanisch gekuppelt. Die Istwertgeber 19, 20 sind
in einfachster Form als Schiebepotentiometer oder Stellwiderstände ausgebildet.

Das elektronische Rechenwerk 18 kann ein Mikroprozessor
sein, wie er bereits häufig zur Steuerung von Kamerafunktionen vorhanden ist. Da dieser Mikroprozessor   in der Regel durch die zu steuernden Kamerafunktionen nicht voll belegt ist, kann die Ansteuerung der Schärfentiefen-Anzeigevorrichtung 13 von einem solchen Mikroprozessor noch zusätzlich übernommen werden. Als zusätzliche Bauelemente sind dann für die Schärfentiefen-Anzeigevorrichtung 13 lediglich die Leuchtdioden 16 notwendig.

Im vorliegenden Ausführungsbeispiel, das besonders für eine Kamera ohne bereits vorhandenen Mikroprozessor geeignet ist, weist das elektronische Rechenwerk 18 einen an sich bekannten integrierten Schaltungsbaustein 23 auf, der in Abhängigkeit von der Größe seiner Eingangsspannung einen seiner Ausgänge, die mit den Leuchtdioden 19 verbunden sind, ansteuert. Ein solcher integrierter Schaltungsbaustein 23 ist unter der Handelsbezeichnung UAA 170 bekannt, der speziell für die Aussteuerung einer 16-stelligen Leuchtdiodenskala entwickelt worden ist. Auch die Firma National Semiconductor vertreibt einen solchen integrierten Schaltungsbaustein 23 unter der Bezeichnung LM 3914. Der Eingang 24 des Schaltungsbausteins 23 ist einerseits mit dem als Potentiometer ausgebildeten Entfernungs-Istwertgeber 19, und zwar mit dessen Spannungsabgriff, und andererseits über einen Kondensator 25 mit dem Blenden-Istwertgeber 20 verbunden, und zwar auch hier mit dem Spannungsabgriff des als Potentiometer ausgebildeten Istwertgebers 20. Der Istwertgeber 19 ist an eine Gleichspannung gelegt, während der Istwertgeber 20 mit einer Wechselspannung verbunden ist. Entsprechend der Entfernungseinstellung mittels des Entfernungseinstellers 21 und der Blendeneinstellung mittels des Blendeneinstellers 22 verschiebt sich der Spannungsabgriff der beiden Potentiometer 19, 20, so daß am Spannungsabgriff eine der jeweiligen Entfernungs- bzw. Blendeneinstellung entsprechende Spannung abgegriffen ist, und zwar an dem Entfernungs-Istwertgeber 19 eine Gleichspannung und an dem Blenden-Istwertgeber 20 eine Wechselspannung. Die Summe der Gleich- und Wechselspannung liegt an dem Eingang 24 des integrierten Schaltungsbausteins 23.

Ist nunmehr, wie in Fig. 1 zu sehen, der Entfernungseinsteller 21 auf die Entfernung 2 m eingestellt, so wird am Entfernungs-Istwertgeber 19 eine Gleichspannung abgegriffen, die repräsentativ für diese Entfernungseinstellung 2 m ist. Diese Spannung liegt, vernachlässigt man zunächst die Wechselspannung von dem Blenden-Istwertgeber 20, am Eingang 24 des Schaltungsbausteins 23. Entsprechend der Größe dieser Eingangsspannung wird der Ausgang des Schaltungsbausteins 23 durchgeschaltet, der mit der Leuchtdiode 16 verbunden ist, die dem Skalenwert 2 m in der Entfernungsskala 14 zugeordnet ist. Nunmehr steht der Blendeneinsteller 22 auf der Blendenzahl k = 11. Der Spannungsabgriff des Blenden-Istwertgebers 20 wird dadurch in eine bestimmte Position gebracht. Am Spannungsabgriff wird nunmehr eine Wechselspannung abgegriffen, deren Amplitude charakteristisch für die Blendenzahl k = 11 ist. Diese Wechselspannung wird nun der Gleichspannung am Eingang 24 des Schaltungsbausteins 23 überlagert. Am Eingang 24 des Schaltungsbausteins 23 liegt damit eine Spannung an, die zwischen einem niedrigen und einem höheren Wert ständig alterniert. Dadurch werden nacheinander ständig eine gewisse Anzahl von Ausgängen des Schaltungsbausteins 23 durchgeschaltet, und die entsprechenden Leuchtdioden 16 leuchten auf. Wie aus Fig. 2 für die Entfernungseinstellung 2 m zu sehen ist, werden durch die Größe der am Eingang 24 des Schaltungsbausteins 23 liegenden Spannung die Ausgänge durchgesteuert, die mit den Leuchtdioden 16

0037839

verbunden sind, die charakteristisch für die Entfernungen 1,5 m, 1,7 m, 2 m, 2,4 m und 3 m sind. Bei einer genügend hohen Frequenz der Wechselspannung kann das menschliche Auge dem ständigen aufeinanderfolgenden Ein- und Ausschalten dieser Leuchtdioden 16 nicht mehr folgen und für den Betrachter entsteht ein Leuchtband, das sich von dem Skalenwert 1,5 m bis zu dem Skalenwert 3 m erstreckt. Damit ist dem Kamerabenutzer der bei der Entfernungseinstellung 2 m und der Blendeneinstellung k = 11 zur Verfügung stehende Schärfenbereich oder Schärfentiefenbereich angezeigt mit der vorderen Grenzentfernung 1,5 m und der hinteren Grenzentfernung 3 m.

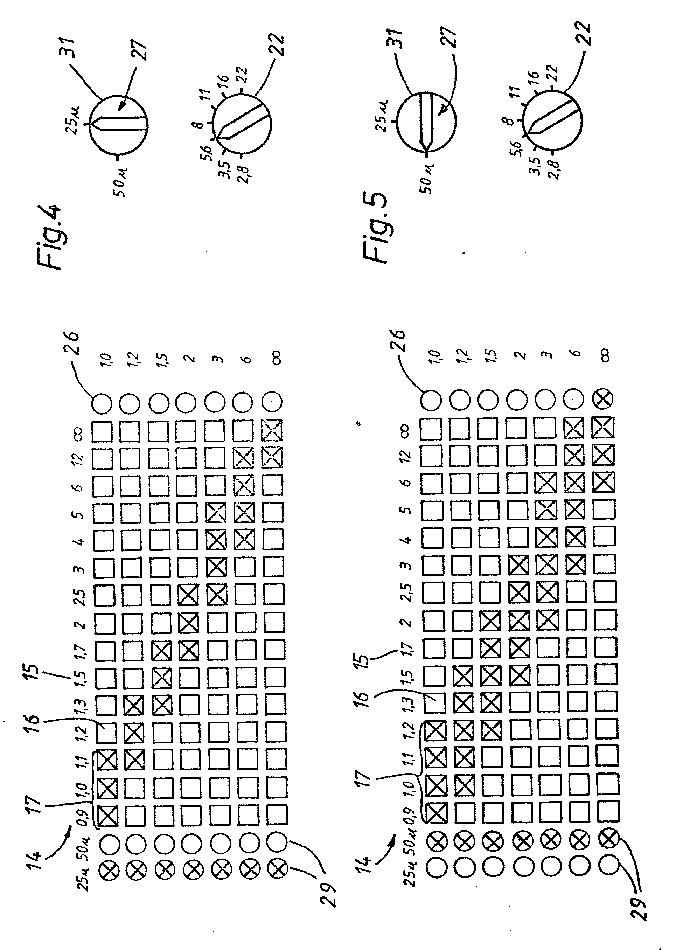

In Fig. 2 ist dargestellt, wie sich der Skalenabschnitt 17, der den Schärfenbereich markiert, verschiebt, wenn der Entfernungseinsteller 21 von der Entfernungseinstellung 1,0 m bis hin zu der Entfernungseinstellung ∞ verstellt wird. Das gleiche ist in Fig. 4 dargestellt für eine mittels des Blendeneinstellers 22 eingestellte Blende von k = 5,6.

Die Schärfentiefen-Anzeigevorrichtung 13 weist weiterhin noch ein Schärfentiefen-Überlauf-Anzeigelement 26 auf, das im Sucherfeld 10 angeordnet ist. Dieses Schärfentiefen-Überlauf-Anzeigeelement 26 ist ebenfalls ein lichtemittierendes Element, z.B. eine Leuchtdiode oder ein Flüssigkristallsegment. Dieses Schärfentiefen-Überlauf-Anzeigeelement 26 wird sichtbar, sobald der aufgrund der eingestellten Entfernung und Blende gegebene Schärfenbereich über die Unendlich-Entfernung hinausgeht. Dies wird in einfacher Weise dadurch realisiert, daß der Ausgang des Schaltungsbausteins 23, der dem mit der ∞-Leuchtdiode 16 der Entfernungsskala 14 verbundenen Ausgang nachgeordnet ist, mit dem

Schärfentiefen-Überlauf-Anzeigelement 26 verbunden ist.
Sind weitere, nicht belegte Ausgänge mit höherer Schwellenspannung am Schaltungsbaustein 23 vorhanden, so sind
alle diese Ausgänge mit dem Schärfentiefen-Überlauf-Anzeigeelement 26 zu verbinden, wie in Fig. 1 strichliniert angedeutet ist. Das Schärfentiefen-Überlauf-Anzeigeelement 26 leuchtet auf, sobald einer dieser Ausgänge durchgeschaltet ist.

Die Wirkungsweise des Schärfentiefen-Überlauf-Anzeigeelements 26 läßt sich am besten anhand der Fig. 2, 3 und 5
erläutern. Wird z.B. in Fig. 2 der Entfernungseinsteller
21 auf die Entfernung 6 m eingestellt, so leuchten die
in der vorletzten Zeile angekreuzten Leuchtdioden 16 auf,
der Schärfenbereich liegt also zwischen der vorderen
Grenze 3 m und der hinteren Grenze ∞ . Stellt nunmehr
der Kamerabenutzer den Entfernungseinsteller 21 auf die
Entfernung ∞ , so wird die Schärfentiefe sozusagen
überlaufen, d.h. der vordere Grenzwert des Schärfenbereichs liegt nunmehr bei 6 m, während die hintere
Grenze, die bereits bei der Entfernungseinstellung 6 m
bei ∞ lag, konstant bleibt. Der Schärfenbereich ist
damit verkleinert, ohne daß dies einen Nutzen für die
Aufnahme mit sich bringt.

In diesem Fall leuchtet, wie in der letzten Zeile der
Fig. 2 durch das Kreuzsymbol symbolisiert, das Schärfentiefen-Überlauf-Anzeigeelement 26 auf und signalisiert dem
Kamerabenutzer, daß die Unendlich-Entfernung überlaufen
ist. Diese Anzeige gibt nunmehr dem Kamerabenutzer die
Möglichkeit, eine "Naheinstellung auf ∞ " vorzunehmen,
d.h. den vorderen Grenzwert des Schärfenbereiches so weit
wie möglich zur Kamera hinzuschieben, ohne den hinteren
Grenzwert von ∞ wegzunehmen. Der Kamerabenutzer hat
lediglich den Entfernungseinsteller 21 wieder in Richtung kleinerer Entfernung zu verdrehen, bis das Schärfentiefen-Überlauf-Anzeigeelement 26 erlischt. Dies ist - wie aus Fig. 2 zu erkennen ist - dann der Fall, wenn der Entfernungseinsteller 21 wieder auf der Entfernung 6 m steht. Dem Kamerabenutzer wird damit die Möglichkeit geboten, die zur Verfügung stehende Schärfentiefe nahe dem Unendlichkeitsbereich optimal auszunutzen.

Es sei angemerkt, daß das Schärfentiefen-Überlauf-Anzeigeelement 26 auch losgelöst von der vorstehend beschriebenen Leuchtband-Anzeige des Schärfenbereichs durch die erfindungsgemäße Schärfentiefen-Anzeigevorrichtung 13 realisiert werden kann . Es kann auch in Kombination mit bereits bekannten Schärfentiefen-Anzeigevorrichtungen verwendet werden. Die Verbindung des Schärfentiefen-Überlauf-Anzeigeelements 26 mit der vorstehend beschriebenen Ausbildung der Schärfentiefen-Anzeigevorrichtung 13 ist aber besonders zweckmäßig, da hier der Kamerabenutzer im Sucher genau beobachten kann, wann der hintere Grenzwert des Schärfenbereiches exakt die Unendlichkeits-Entfernung ist und wann dann der Überlauf eintritt.

An der Kamera ist weiterhin ein Zerstreuungskreis-Vorwähler 27 vorgesehen, der manuell bedienbar ist und zur Eingabe des der Bestimmung des Schärfenbereichs zugrundeliegenden Zerstreuungskreises dient. Zur Anzeige des jeweils mittels dieses Vorwählers 27 eingestellten Zerstreuungskreises, z.B. 25 µ, ist im Sucherfeld 10 eine Zerstreuungskreis-Anzeige 28 angeordnet. Diese weist zwei lichtemittierende Elemente, z.B. Leuchtdioden 29 oder Flüssigkristallzellen auf, die je nach Stellung des Vorwählers 27 alternativ eingeschaltet sind. Jeder Leuchtdiode 29 ist ein für den Benutzer sichtbares

Symbol "25 μ" bzw. "50 μ" zugeordnet.

Dieser Zerstreuungskreis-Vorwähler 27 gibt dem Kamerabenutzer die Möglichkeit, zu wählen zwischen einerseits
einer hohen Abbildungsqualität mit der Möglichkeit einer starken
Nachvergrößerung des Negativs unter Inkaufnahme eines
nur geringen Schärfenbereiches und andererseits einer
etwas schlechteren Abbildungsqualität bei Gewinnung
eines größeren Schärfentiefenbereichs. Dies läßt sich
am besten anhand der Fig. 2 und 3 verdeutlichen. Die
Einstellung des Blendeneinstellers 22 ist in Fig. 2 und
3 unverändert. In Fig. 2 ist der Zerstreuungskreis-
Vorwähler 27 auf 25 μ eingestellt, während er in Fig. 3
auf 50 μ eingestellt ist. Bei der Einstellung des Entfernungseinstellers 21 auf z.B. die Entfernung 2 m
ergibt sich bei einem Zerstreuungskreisdurchmesser von
25 μ (Fig. 2) ein Schärfenbereich von 1,5m bis 3 m.
Bei der gleichen Entfernungseinstellung 2m ergibt hingegen die Einstellung des Zerstreuungs-Vorwählers 27
auf 50 μ (Fig. 2) einen Schärfentiefenbereich von 1,2 m
bis 6 m, also beträchtlich größer. Der Kamerabenutzer
hat also im zweiten Fall einen größeren Schärfenbereich,
weiß aber durch Aufleuchten der Leuchtdiode 29 für den
Zerstreuungskreis 50 μ, daß er damit eine etwas schlechtere Abbildungsqualität erzielt, die eine starke Nachvergrößerung des Negativs nicht zuläßt.

Im vorliegenden Ausführungsbeispiel kann der Zerstreuungskreis-Vorwähler 27 ein Potentiometer 30 aufweisen, dessen
Spannungsabgriff mechanisch mit dem Einstellknopf 31
des Vorwählers 27 gekuppelt ist. Das Potentiometer 30
kann ein zweistufiges Potentiometer sein, das lediglich die Einstellung von zwei Spannungswerten, entsprechend der Einstellung des Einstellknopfes 31 auf 25 μ bzw.
50 μ zuläßt. Weist - wie in dem hier beschriebenen Ausführungsbeispiel - das elektronische Rechenwerk 18 den bekannten integrierten Schaltungsbaustein 23 auf, so ist es möglich, das Potentiometer 30 an eine Wechselspannungsquelle zu legen und den Spannungsabgriff ebenfalls mit dem Eingang 24 des Schaltungsbausteins 23 zu verbinden. Der Spannungsabgriff ist außerdem mit einem Spannungsdetektor 32 verbunden, der entsprechend dem an seinem Eingang liegenden Effektivwert der am Potentiometer 30 abgegriffenen Wechselspannung die eine oder die andere der beiden Leuchtdioden 29 einschaltet. Z.B. kann bei der Einstellung des Einstellknopfes 31 auf 25 μ am Potentiometer 30 die Spannung 0 V abgegriffen werden, so daß die Verhältnisse wie vorstehend beschrieben sind und auf der Entfernungsskala je nach Blenden- und Entfernungseinstellung ein dem zur Verfügung stehenden Schärfentiefenbereich entsprechender Skalenabschnitt aufleuchtet (vgl. Fig. 2 und 4). Wird nunmehr der Einstellknopf 31 auf 50 μ umgeschaltet, so wird zu der Summenspannung am Eingang 24 des Schaltungsbausteins 23 eine weitere Wechselspannung hinzuaddiert, die mit der an dem Blenden-Istwertgeber 20 abgegriffenen Wechselspannung phasengleich ist. Auch hier ist zweckmäßigerweise zwischen dem Spannungsabgriff des Potentiometers 30 und dem Eingang 24 des Schaltungsbausteins 23 ein Kondensator 33 angeordnet. Durch diese zusätzliche Wechselspannung wird die Amplitude der die Gleichspannung, die für die eingestellte Entfernung repräsentativ ist, überlagernden Wechselspannung vergrößert und dementsprechend der die Schärfentiefe kennzeichnende Skalenabschnitt 17 verlängert (vgl. Fig. 3 und 5).

Auch hier sei angemerkt, daß der vorstehend beschriebene Zerstreuungskreis-Vorwähler 27 mit der Zerstreuungskreis-Anzeige 28 auch losgelöst von der eingangs beschriebenen Schärfentiefen-Anzeigevorrichtung 13 und auch losgelöst von dem Schärfentiefen-Überlauf-

0037839

Anzeigeelement 26 unabhängig funktioniert. Er kann mit den verschiedenst ausgestalteten Schärfentiefen-Anzeigevorrichtungen, auch den bekannten, kombiniert werden, ohne daß er seine vorteilhaften Eigenschaften verliert. Ebenso wie das vorstehend beschriebene Schärfentiefen-Überlauf-Anzeigeelement fördert aber auch der Zerstreuungskreis-Vorwähler 27 mit der Zerstreuungskreis-Anzeige 28 das Problem, dem Kamerabenutzer einen sofortigen Überblick über den Schärfenbereich zu ermöglichen, ohne hierzu lange Überlegungen anstellen zu müssen, wobei der technische Aufwand zur Realisierung verschwindend gering ist.

Die Erfindung ist nicht auf die vorstehend beschriebene Sucherkamera beschränkt. Sie eignet sich in gleich vorteilhafter Weise auch für eine Spiegelreflexkamera, wobei die vorstehende Beschreibung des Ausführungsbeispieles gleichermaßen zutrifft, mit dem einzigen Unterschied, daß im Sucherfeld 10 die Parallaxmarken 12 entfallen und eine Scharfeinstellhilfe, z.B. eine Mattscheibe mit Mikroraster, zu sehen ist.

-.-.-.-.-.-.-.-.-

Rollei-Werke
Franke & Heidecke
GmbH & Co KG
3300 Braunschweig                    18. März 1980


Patentansprüche

1. Kamera mit einer Vorrichtung zur Anzeige der Schärfentiefe, die eine im Sucher sichtbare Entfernungsskala aufweist, auf welcher ein dem durch die eingestellte Blende und Entfernung gegebenen Schärfentiefenbereich entsprechender Skalenabschnitt markierbar ist, d a d u r c h g e k e n n z e i c h - n e t , daß jedem Skalenwert (15) der Entfernungsskala (14) ein lichtemittierendes Element (16), z.B. Leuchtdiode oder Flüssigkristallzelle, zugeordnet ist und daß nur die in dem dem Schärfentiefenbereich entsprechenden Skalenabschnitt(17) angeordneten Elemente, vorzugsweise durch gleichzeitiges oder annäherndgleichzeitiges Aufleuchten, sichtbar sind.

2. Kamera nach Anspruch 1, d a d u r c h g e - k e n n z e i c h n e t , daß ein elektronisches Rechenwerk (18), dessen Ausgänge mit den lichtemittierenden Elementen (16) verbunden sind, und zwei jeweils mit einem Blenden- bzw. Entfernungseinsteller (22, 21) gekuppelte Istwertgeber (20, 19), vorzugsweise Potentiometer, vorgesehen sind, die mit den Eingängen (24) des Rechenwerks (18) verbunden sind.

0037839

3. Kamera nach Anspruch 2, d a d u r c h g e -
k e n n z e i c h n e t , daß das elektronische
Rechenwerk (18) einen an sich bekannten integrierten
Schaltungsbaustein (23) aufweist, der in Abhängigkeit von der Größe seiner Eingangsspannung jeweils
einen seiner Ausgänge ansteuert, daß die Ausgänge
des Schaltungsbausteins (23) mit den lichtemittierenden Elementen (16) verbunden sind, daß an dem
Eingang (24) des Schaltungsbausteins (23) die Summe
der Ausgangsspannungen der Istwertgeber (19, 20)
liegt und daß die Ausgangsspannung des Istwertgebers
(19) für die eingestellte Entfernung eine Gleichspannung und die Ausgangsspannung des Istwertgebers
(20) für die eingestellte Blende eine Wechselspannung ist.

4. Kamera nach Anspruch 3, d a d u r c h g e -
k e n n z e i c h n e t , daß zwischen dem Istwertgeber (20) für die eingestellte Blende und dem Eingang (24) des Schaltungsbausteins (23) ein Kondensator (25) angeordnet ist.

5. Kamera, insbesondere nach einem der Ansprüche 1 - 4,
d a d u r c h g e k e n n z e i c h n e t , daß
die Vorrichtung (13) zur Anzeige der Schärfentiefe
ein, vorzugsweise im Sucher (10) angeordnetes,
Schärfentiefen-Überlauf-Anzeigeelement (26), vorzugsweise in Form eines lichtemittierenden Elements,
z.B. Leuchtdiode oder Flüssigkristallzelle, aufweist, das anspricht sobald der aufgrund der
eingestellten Entfernung und Blende gegebene Schärfentiefenbereich in seinem hinteren Entfernungsgrenzwert über die Unendlich-Entfernung hinausgeht.

6. Kamera nach Anspruch 5, d a d u r c h g e k e n n -
z e i c h n e t , daß das Schärfentiefen-Überlauf-
Anzeigeelement (26) mit mindestens einem weiteren
Ausgang des elektronischen Rechenwerkes (18) bzw.
des Schaltungsbausteins (23) verbunden ist.

7. Kamera, insbesondere nach einem der Ansprüche 1 - 6,
g e k e n n z e i c h n e t ,d u r c h einen manuell bedienbaren Zerstreuungskreis-Vorwähler (27)
zur Eingabe des der Bestimmung des Schärfentiefenbereiches zugrundeliegenden Zerstreuungskreises und
eine vorzugsweise im Sucher (10) angeordnete Zerstreuungskreis-Anzeige (28), die den vorgewählten
Zerstreuungskreis, z.B. 25 μ oder 50 μ, anzeigt.

8. Kamera nach Anspruch 7, d a d u r c h g e -
k e n n z e i c h n e t , daß der Zerstreuungskreis-
Vorwähler (27) mit der Zerstreuungskreis-Anzeigevorrichtung (28) an dem elektronischen Rechenwerk (18)
angeschlossen ist.

-.-.-.-.-.-.-.-.-.-

0037839

Fig.1

**Fig. 2**

14  17  16  15  26

25μ 50μ 0,9 1,0 1,1 1,2 1,3 1,5 1,7 2 2,5 3 4 5 6 12 ∞

1,0
1,2
1,5
2
3
6
∞

29

25μ — 31
50μ —
27

5,6  8  11
3,5      16
2,8      22
22

**Fig. 3**

14  17  16  15  26

25μ 50μ 0,9 1,0 1,1 1,2 1,3 1,5 1,7 2 2,5 3 4 5 6 12 ∞

1,0
1,2
1,5
2
3
6
∞

29

25μ — 31
50μ —
27

5,6  8  11
3,5      16
2,8      22
22

Fig.4

Fig.5

**Europäisches Patentamt**

**EUROPÄISCHER·RECHERCHENBERICHT**

C037839
Nummer der Anmeldung

EP 80 10 1837.5

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| | **EINSCHLÄGIGE DOKUMENTE** | | |
| X | DE - A1 - 2 923 443 (BOLEX INTERNATIONAL)<br><br>* Ansprüche 3 bis 5 *<br><br>-- | 1,2 | G 03 B    3/08 |
| A | AT - B - 329 375 (EUMIG)<br><br>-- | | |
| A | DE - B-1 185 913 (ELBE-KAMERA)<br><br>-- | | |
| A | DE - B2 - 1 918 958 (K. VOCKENHUBER et al.)<br><br>---- | | |

**RECHERCHIERTE SACHGEBIETE (Int. Cl.³)**

G 03 B    3/00
G 03 B    17/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 11-11-1980 | HOPPE |

EPA form 1503.1   06.78